# FASCICULE DE BREVET EUROPEEN

(11) **EP 2 223 828 B1**
(45) Date de publication et mention de la délivrance du brevet: **05.09.2012**
(21) Numéro de dépôt: 10305038.1
(22) Date de dépôt: 13.01.2010
(51) Int. Cl.: B60R 16/06, B60J 7/057

(54) **Agencement de protection électrique pour véhicule automobile**
Elektrische Schutzanordnung für Kraftfahrzeug
Automotive vehicle electrical protection arrangement

(30) Priorité: 27.02.2009 FR 0900907
(43) Date de publication de la demande: 01.09.2010
(73) Titulaire: Renault S.A.S., 92100 Boulogne-Billancourt (FR)
(72) Inventeur: Bernhard, Eric, 78280, GUYANCOURT (FR); Megard, Benoit, 92320, CHATILLON (FR); Nguyen, Hoang-Giang, 91130, RIS-ORANGIS (FR)

(56) Documents cités:
- FR-A- 2 908 264
- JP-A- 2007 083 994

## Description

L'invention concerne un agencement pour véhicule automobile comprenant un premier actionneur destiné à mouvoir un premier composant mobile, ce premier actionneur étant protégé contre les fortes décharges électriques et/ou électrostatiques, et comprenant au moins un second actionneur destiné à mouvoir un second composant mobile. Elle est particulièrement adaptée à une implantation au niveau d'un toit du véhicule automobile comprenant plusieurs éléments mobiles comme un panneau de verre et un rideau. Enfin, elle concerne aussi un véhicule automobile en tant que tel comprenant un tel agencement.

De manière connue, certains véhicules automobiles possèdent des composants mobiles susceptibles d'accumuler des charges électrostatiques lorsqu'ils sont soumis à un champ électrique intense. C'est le cas par exemple des véhicules équipés de toits ouvrants à moteur électrique, de toits en verre fixe équipés d'un rideau à moteur électrique. C'est encore le cas des cabriolets équipés de toits en verre repliables.

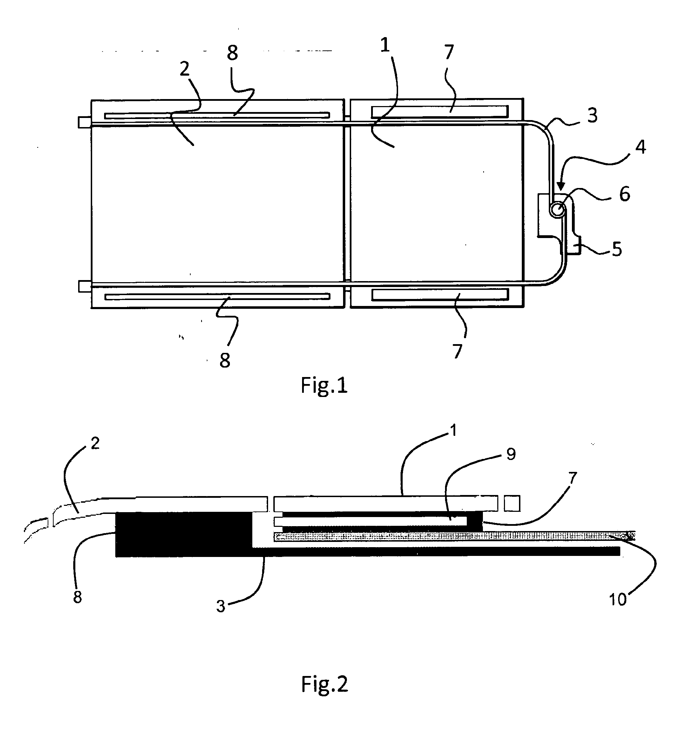

A titre d'exemple, la figure 1 illustre la partie centrale du toit d'un véhicule équipé d'un toit ouvrant selon un état de la technique. Elle comprend un panneau en verre fixe 1 et un panneau en verre mobile 2 par glissement externe au-dessus du panneau 1 ou glissement externe par rapport à la carrosserie du véhicule. Le panneau mobile 2 est mû par un mécanisme à base de tubes d'entraînement 3 entraîné par un actionneur électromécanique 4. En pratique, le mécanisme est constitué de tubes métalliques longilignes 3, tandis que l'actionneur 4 comprend un moteur électrique piloté par une carte électronique 5. Le moteur électrique transmet sa puissance au mécanisme par l'intermédiaire d'un organe d'articulation 6. Dans la mesure où le moteur électrique représente la fonction principale de l'actionneur électromécanique 4, on désigne parfois l'actionneur 4 électromécanique par le terme de moteur électrique. La carte électronique 5 est composée, de manière connue, d'un substrat rigide sur lequel sont montés les composants électroniques du circuit de commande du moteur électrique. En général, le moteur électrique est monté juste à côté de la carte électronique 5 et l'arbre du pignon d'entraînement de l'organe d'articulation 6 est aménagé au sein d'un orifice traversant la carte électronique 5.

Les panneaux de verre fixe 1 et mobile 2 sont assemblés par l'intermédiaire de rails métalliques 7, 8. L'ensemble formé par ces panneaux 1, 2 et rails 7, 8 est fixé par collage sur la carrosserie du véhicule automobile, par des rails non représentés. Cet agencement par collage isole électriquement de la carrosserie les panneaux en verre 1, 2 ainsi que les rails métalliques 7, 8. Les tubes d'entraînement 3 sont montés sur l'ensemble présentant une mobilité formé par les panneaux 1, 2 et rails 7, 8. Au cours de certaines opérations de montage du véhicule ou de roulage, les panneaux en verre 1 et 2, électriquement isolants, peuvent accumuler des charges électrostatiques et élever ainsi leur potentiel depuis des centaines de volts jusqu'à plusieurs milliers de volts.

Ces charges élevées mettent en danger les composants électroniques de l'actionneur 4 montés sur la carte électronique 5 et reliés à la masse du véhicule, puisqu'ils sont reliés électriquement jusqu'au voisinage des panneaux en verre par l'intermédiaire des tubes d'entraînement 3 et des rails 7, 8 qui sont des éléments en métal.

Pour supprimer le risque de décharge électrique au travers de la carte électronique 5 de l'actionneur 4, le document FR2908264 propose une solution dans laquelle un collecteur électriquement conducteur est relié électriquement à la masse de la carte électronique et agencé à faible distance et en regard de l'organe d'articulation 6 de manière à présenter une résistance électrique quasi-nulle à l'écoulement des charges électrostatiques. Ainsi, en cas de décharge électrique provenant des panneaux en verre, le courant peut rejoindre la masse par le collecteur en épargnant les composants électroniques de la carte 5 qui reste intacts. L'actionneur devient ainsi un élément électriquement protégé.

Le document FR 2 908 264 décrit un agencement pour véhicule automobile correspondant au préambule de la revendication 1.

Toutefois, dans la plupart des configurations existantes, plusieurs actionneurs coexistent pour remplir des fonctions voisines et complémentaires. Par exemple, le toit en verre mobile 2 est en général actionné par un premier actionneur alors qu'un rideau mobile positionné sous le toit en verre fixe 1 est actionné par un second actionneur. La solution précédente ne s'intéresse pas à cette configuration à plusieurs actionneurs et ne propose la protection que d'un seul actionneur isolé,

Ainsi, il existe un besoin de définir une solution optimisée pour sécuriser électriquement un agencement comprenant plusieurs actionneurs.

Un objet général de l'invention est de proposer une solution sécurisée au niveau électrique de l'ensemble des actionneurs d'un dispositif d'un véhicule automobile.

A cet effet, l'invention repose sur un agencement pour véhicule automobile comprenant les caractéristiques de la revendication 1.

L'agencement peut comprendre un panneau de toit mobile, des rails de guidage pour le panneau de toit mobile, au moins un tube d'entraînement pour le panneau de toit mobile et comprendre un panneau de toit fixe, un rideau mobile, des rails des rails de guidage pour le rideau mobile, au moins un tube d'entraînement pour le rideau mobile, et le au moins un tube d'entraînement pour le panneau de toit mobile et le au moins un tube d'entraînement pour le rideau mobile peuvent être respectivement reliés mécaniquement et électriquement au premier actionneur et à un second actionneur, le panneau de toit mobile représentant le premier composant mobile et le rideau mobile un second composant mobile, ou inversement.

Le moyen de transfert de charges peut comprendre au moins un collier conducteur reliant électriquement tous les tubes d'entraînement du second composant mobile à au moins un tube d'entraînement du premier composant mobile.

L'agencement peut aussi comprend deux colliers reliant chacun deux tubes d'entraînement pour le panneau de toit mobile et deux tubes d'entraînement pour le rideau mobile, ces deux colliers étant implantés en amont et en aval et au plus près du second actionneur non protégé électrostatiquement ou électriquement.

Le moyen de transfert de charges peut comprendre une liaison électrique entre le au moins tube d'entraînement du second composant mobile et la masse électrique de l'actionneur protégé contre les fortes décharges électriques et/ou électrostatiques.

L'agencement peut comprendre un collier métallique de serrage du au moins un tube d'entraînement du second composant mobile, relié électriquement à un fil de masse électrique par l'intermédiaire d'une cosse, le fil de masse électrique étant relié à la masse électrique du connecteur d'entrée de l'actionneur protégé.

Le au moins un tube d'entraînement du second composant mobile peut être relié électriquement à au moins un rail de guidage métallique du premier composant mobile.

De plus, l'agencement peut comprendre un collier de cerclage d'au moins un tube d'entraînement maintenu par une vis traversant le rail de guidage métallique du premier composant mobile.

Le moyen de transfert de charges peut comprendre une liaison conductrice entre les rails de guidage du rideau mobile et les rails de guidage du panneau de toit mobile,

Le moyen de transfert de charges peut comprendre une liaison conductrice entre le au moins un tube d'entraînement du rideau mobile, les rails de guidage du rideau mobile, les rails de guidage du toit ouvrant et le au moins un tube d'entraînement du panneau mobile du toit ouvrant.

Le moyen de transfert de charges peut comprendre une liaison entre les deux axes de rotation de respectivement les moteurs du premier actionneur et du second actionneur.

Le premier actionneur peut comprendre un collecteur électriquement conducteur relié électriquement à la masse de sa carte électronique et agencé à faible distance en regard d'un organe d'articulation de l'actionneur lié à au moins un tube d'entraînement du premier composant mobile de manière à présenter une résistance électrique quasi-nulle à l'écoulement des fortes décharges électriques et/ou électrostatiques.

L'invention porte aussi sur un véhicule automobile caractérisé en ce qu'il comprend un agencement tel que décrit précédemment.

Ces objets, caractéristiques et avantages de la présente invention seront exposés en détail dans la description suivante de modes d'exécution particuliers faits à titre non-limitatif en relation avec les figures jointes parmi lesquelles :
La figure 1 représente schématiquement en vue de dessus un agencement de toit ouvrant (aussi appelé selon la dénomination anglaise « sunroof ») selon un état de la technique.
La figure 2 représente schématiquement en coupe de côté une partie du toit d'un véhicule automobile à laquelle s'intéresse les modes d'exécution de l'invention,
La figure 3 représente de même schématiquement en coupe de côté une partie du toit d'un véhicule automobile à laquelle s'intéresse les modes d'exécution de l'invention.
La figure 4 représente schématiquement en coupe de côté un agencement de toit ouvrant mettant en oeuvre le concept de l'invention.
La figure 5 représente schématiquement en vue de dessous une partie de l'agencement de toit ouvrant selon un premier mode d'exécution de l'invention.
Les figures 6a et 6b représentent un détail de l'agencement de toit ouvrant selon le premier mode d'exécution de l'invention.
La figure 7 représente schématiquement en vue de dessus un agencement de toit ouvrant selon un second mode d'exécution de l'invention.
La figure 8 représente en vue de dessus une partie de l'agencement de toit ouvrant selon le second mode d'exécution de l'invention.
La figure 9 représente schématiquement en vue de dessus une partie de l'agencement de toit ouvrant selon le second mode d'exécution de l'invention.
Les figures 10a à 10d représentent des détails de l'agencement de toit ouvrant selon le second mode d'exécution de l'invention.
Les figures 11a et 11b représentent des parties de l'agencement de toit ouvrant selon un troisième mode d'exécution de l'invention.
La figure 12 représente schématiquement en coupe de côté un agencement de toit ouvrant selon un quatrième mode d'exécution de l'invention.
La figure 13 représente schématiquement en coupe de côté l'agencement de toit ouvrant selon le quatrième mode d'exécution de l'invention.
La figure 14 représente schématiquement en coupe de côté un agencement de toit ouvrant selon un cinquième mode d'exécution de invention.
La figure 15 représente une vue schématique du détail du cinquième mode d'exécution de l'invention.
La figure 16 représente une vue schématique en coupe du détail d'un sixième mode d'exécution de l'invention.
La figure 17 représente une vue schématique en coupe du détail d'une variante du sixième mode d'exécution de l'invention.

Pour faciliter la description suivante, nous définissons l'axe y pour la direction horizontale longitudinale dans le sens de la longueur d'un véhicule automobile, orienté de l'arrière vers l'avant, l'axe x pour la direction horizontale transversale, perpendiculaire à l'axe y, et l'axe z pour la direction verticale, orientée vers le haut. D'autre part, les mêmes éléments porteront les mêmes références dans les différentes figures et les différents modes d'exécution.

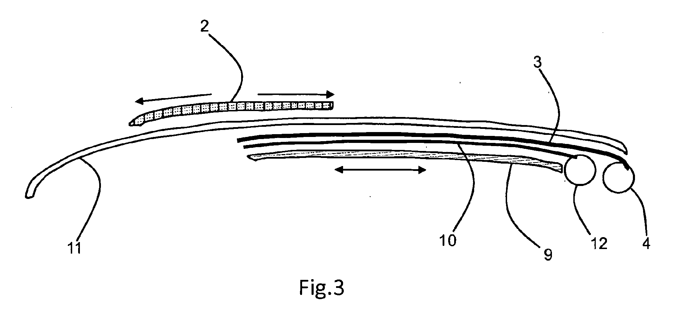

La figure 2 illustre un agencement de toit ouvrant auquel s'intéressent les différents modes d'exécution décrits par la suite. Cet agencement comprend dans la partie antérieure un panneau de verre mobile 2 collé sur des rails métalliques 8 et mis en mouvement par un mécanisme qui consiste en des tubes d'entraînement 3 métalliques et des vis sans fin souples, sous forme de ressorts métalliques par exemple. Ces vis sans fin métalliques présentent une extrémité solidaire du panneau mobile 2 et une autre libre. Elles sont entraînées par un actionneur. Par la suite nous utiliserons donc le terme de tube métallique 3 pour ce mécanisme, qui pourrait toutefois se présenter sous différentes formes, L'agencement comprend de plus dans sa partie arrière un panneau de verre fixe 1 collé sur des rails 7. Il comprend de plus un rideau mobile 9, aussi appelé velum (ou par sa dénomination anglaise de « sunshade »), lié aux rails 7 et mis en mouvement par des tubes d'entraînement métalliques 10. La figure 3 montre le positionnement des différents éléments de l'agencement du toit du véhicule par rapport à la partie supérieure 11 de la carrosserie. Le panneau mobile 2 est représenté dans une position semi-ouverte, par son glissement à l'extérieur du toit de la carrosserie. En variante, il pourrait glisser à l'intérieur de la carrosserie. Dans la partie arrière du véhicule, les tubes d'entrainement 3 du panneau de verre mobile 2 sont reliés à un premier actionneur 4 et les tubes d'entraînement 10 du rideau mobile 9 sont reliés à un second actionneur distinct 12.

Les deux panneaux de verre fixe 1 et mobile 2 sont fixés au véhicule par une colle isolante et sont donc susceptibles de stocker et de transmettre des charges électrostatiques par effet condensateur qui peuvent subvenir lors d'étapes de fabrication du véhicule ou lors du roulage. Ainsi, l'ensemble formé par le panneau mobile 2 et ses rails métalliques 7, séparés par une couche isolante, se comporte comme un premier condensateur électrique. De même, l'ensemble formé par le panneau en verre fixe et le rideau mobile se comporte comme un second condensateur. Ces charges sont ensuite susceptibles de se décharger au travers des éléments métalliques avoisinants, qui conduisent jusqu'aux actionneurs et mettent en danger leurs éléments fragiles, notamment leur carte électronique.

Selon le concept de l'invention, un des deux actionneurs est sécurisé ou protégé contre les décharges électriques ou électrostatiques par une liaison à la masse permettant à ces décharges de contourner ses composants, par exemple selon une solution telle que celles décrites dans le document FR2908264. Le second actionneur n'est pas directement sécurisé de manière similaire. En revanche, un moyen conducteur de transfert de charges est prévu entre le circuit conducteur le reliant au voisinage du toit et susceptible de conduire les fortes décharges électriques ou électrostatiques provenant du toit, et le circuit électrique similaire conduisant au premier actionneur sécurisé de sorte qu'en cas de décharge électrique ou électrostatique, le courant est dévié par ce moyen conducteur formant un pont de transfert de charges vers l'actionneur sécurisé, maintenant ainsi les deux actionneurs finalement indemnes. Le second actionneur est ainsi indirectement protégé en profitant du mécanisme de protection du premier actionneur.

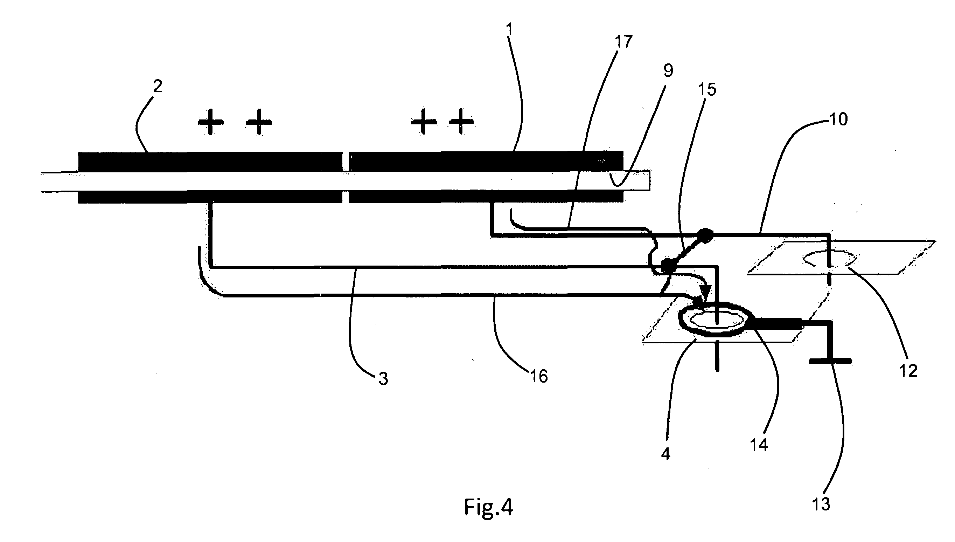

La figure 4 illustre schématiquement le principe de l'invention. L'actionneur 4 du panneau mobile 2 est sécurisé par un moyen 14 relié à la masse 13. L'actionneur 12 du rideau mobile 9 n'est pas sécurisé de manière similaire. En revanche, il existe au moins un moyen ou pont de transfert de charges électriques 15 représenté entre les tubes métalliques 10 et 3 de respectivement le rideau mobile 9 et le panneau mobile 2. Ainsi, en cas de décharge électrostatique provenant du premier condensateur, soit du panneau mobile 2, le courant électrique résultant 16 va suivre le tube d'entraînement 3 métallique du panneau mobile puis contourner l'actionneur 4 par le moyen de protection 14. En cas de décharge électrostatique provenant du second condensateur au niveau du panneau fixe 1, le courant électrique 17 va d'abord suivre les tubes d'entraînement métalliques 10 du rideau mobile puis le pont de charges 15 pour rejoindre les tubes métalliques 3 du panneau en verre mobile et être de même dévié vers la masse 13 par le moyen de protection 14. En variante, la protection électrique 14 pourrait être implémentée sur l'actionneur 12 du rideau mobile 9 et non sur celui du panneau mobile 2.

Le pont de charges 15 entre les deux circuits a été représenté schématiquement pour illustrer le concept de l'invention. Il pourrait naturellement se trouver à tout endroit du circuit électrique entre le toit et le second actionneur 12, de sorte qu'une décharge électrique soit déviée avant d'atteindre le second actionneur 12. Les différents modes d'exécution décrivent ci-après plusieurs façons de mettre en oeuvre ce pont de charge 15 à titre d'exemple.

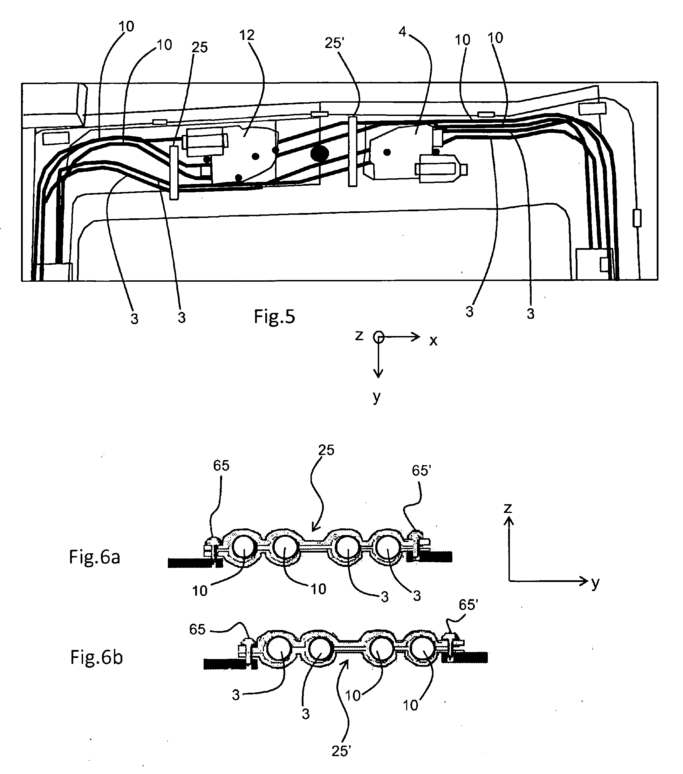

Les figures 5 et 6 illustrent ainsi un premier mode d'exécution de l'invention. La figure 5 représente une vue de dessous de la partie arrière de l'agencement, dans laquelle apparaissent les deux actionneurs 4, 12 du dispositif. Chaque actionneur est relié par quatre tubes métalliques 3, 10 à respectivement le panneau mobile 2 et le rideau 9 non représentés sur cette figure. Selon ce mode d'exécution, deux doubles colliers de cerclage 25, 25' en matériau conducteur remplissent la fonction de pont de charges en complément de la fonction de maintien et fixation des quatre tubes d'entraînement 3, 10. Ces deux colliers 25, 25' sont implantés en amont et en aval et au plus près de l'actionneur non protégé '12, et relient électriquement les tubes d'entraînement des rideaux mobiles aux tubes d'entraînement du toit ouvrant dont l'actionneur est protégé contre les décharges électrostatiques ou électriques.

Les figures 6a et 6b illustrent en coupe selon un plan longitudinal vertical yz les colliers de cerclage 25, 25'. Chaque collier est un double collier permettant le maintien de deux tubes d'entraînement 10 pour le rideau mobile 9 et deux tubes d'entraînement 3 pour le panneau mobile 2. Les extrémités des colliers sont fixées par des vis de serrage 65, 65'. En variante, tout autre moyen de fixation pourrait être utilisé.

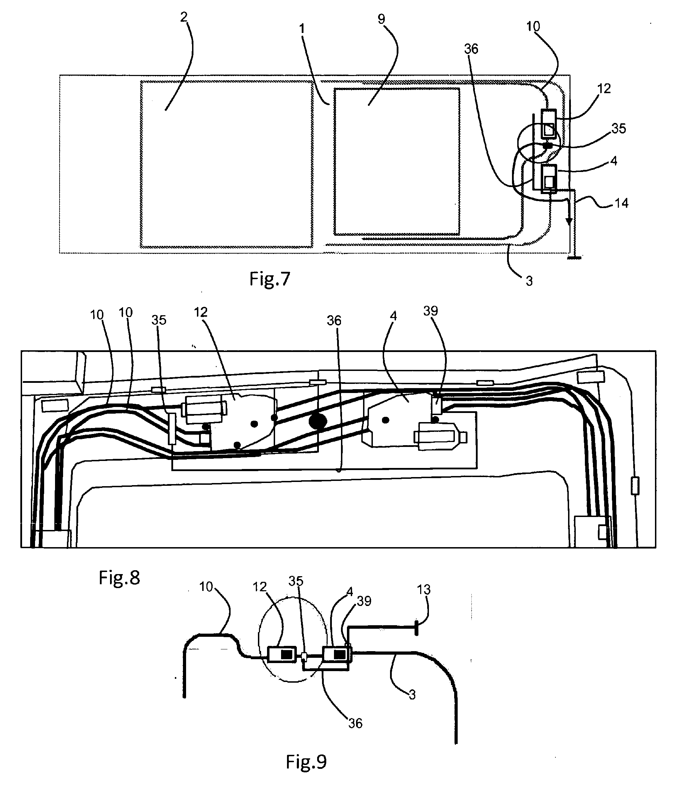

Les figures 7, 8, 9, 10a à 10d illustrent un second mode d'exécution de l'invention. Comme cela est visible sur les figures 7 à 9, le pont de transfert de charges réalise la liaison électrique entre les tubes d'entraînement 10 du rideau mobile 9 et la masse électrique de l'actionneur 4 du panneau de verre mobile 2.

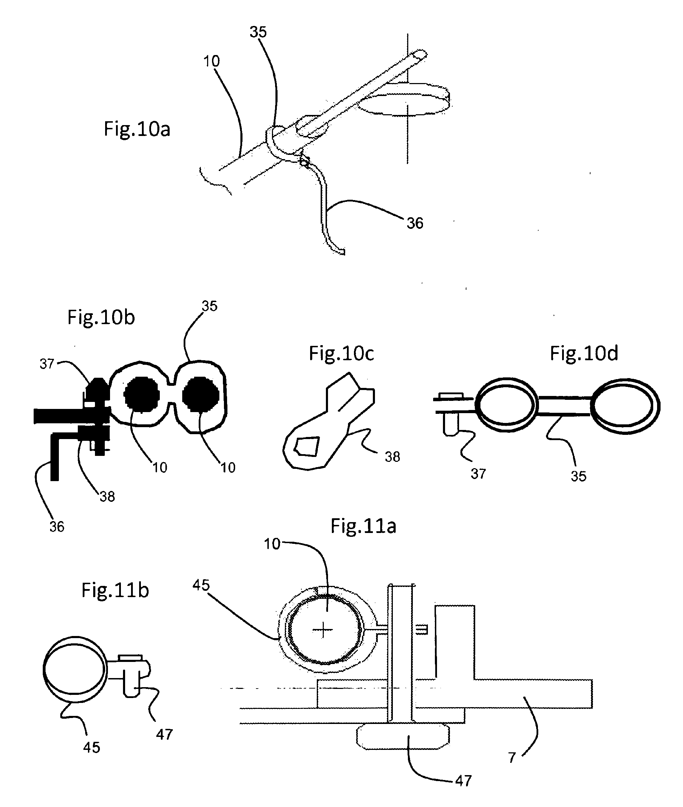

Pour cela, un collier métallique 35 remplissant la fonction de fixation des tubes d'entraînement 10 du rideau mobile 9 et positionné en amont de l'actionneur 12 du rideau mobile 9 est relié à la masse 14 de l'actionneur 4 protégé par l'intermédiaire d'un fil de masse électrique 36 relié d'une part à la vis de serrage 37 du collier 35 par l'intermédiaire d'une cosse 38 et d'autre part à la masse ou au fil de masse du connecteur d'entrée 39 de l'actionneur protégé 4. Ces différents éléments sont détaillés sur les figures 10a à 10d.

La figure 11a illustre un troisième mode d'exécution de l'invention dans lequel les tubes d'entraînement 10 du rideau mobile 9 sont reliés électriquement à au moins un rail de guidage 7 métallique du panneau en verre mobile 2. Pour cela, un collier de cerclage 45 en matériau conducteur, représenté sur la figure 11b, de maintien et serrage du tube d'entraînement 10 est maintenu par une vis 47 traversant le rail 7. Une décharge électrique arrivant par le tube d'entraînement 10 sera bien ainsi réorientée sur le rail de guidage métallique du panneau mobile, relié à la masse de l'actionneur sécurisé 4 du panneau mobile 2 selon la protection explicitée précédemment.

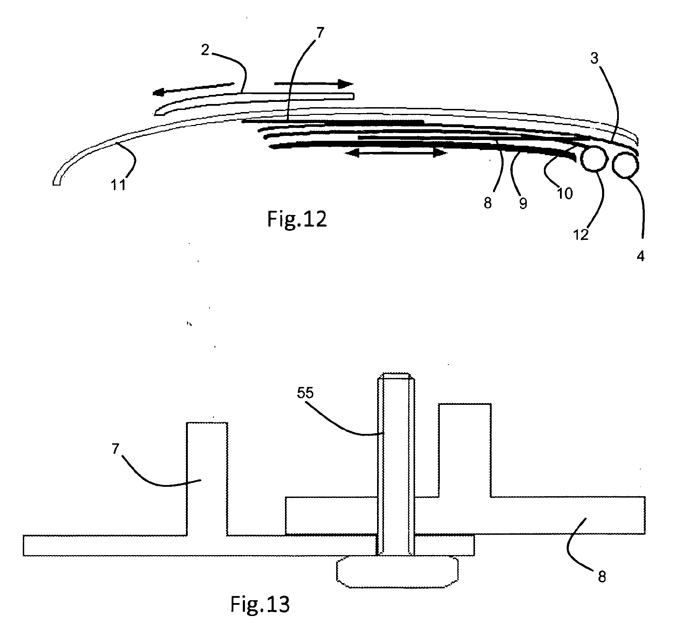

Les figures 12 et 13 illustrent un quatrième mode d'exécution de l'invention dans lequel un pont de transfert de charges est réalisé par l'intermédiaire d'une vis 55 ou de tout autre moyen de liaison électrique entre les rails de guidage 8 du rideau mobile 9 et les rails de guidage 7 du panneau mobile 2.

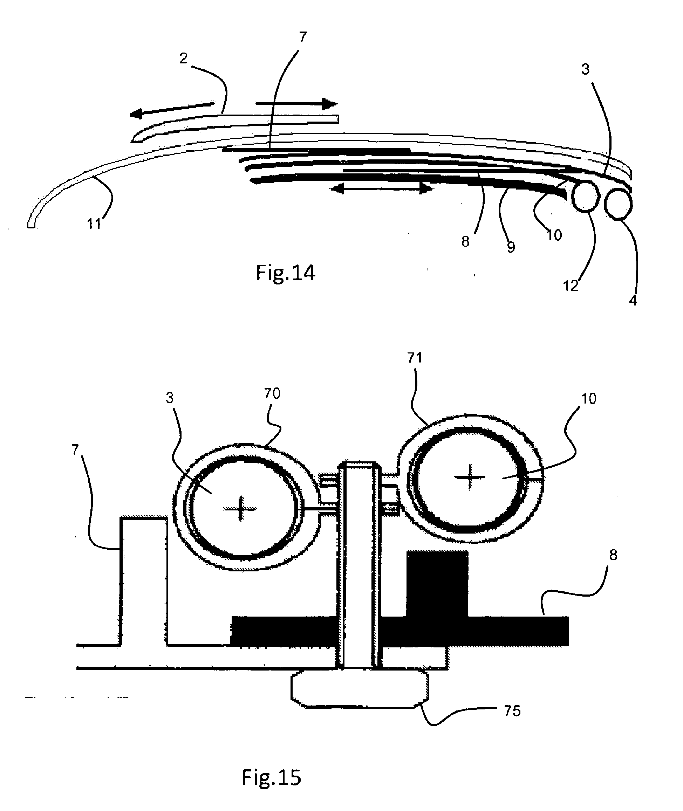

Les figures 14 et 15 illustrent un cinquième mode d'exécution de l'invention dans lequel le pont de transfert de charges est obtenu par vissage entre des tubes d'entraînement du rideau mobile, ses rails de guidage et les tubes d'entraînement du toit ouvrant, ses rails de guidage. Pour cela, une vis 75 peut traverser respectivement le rail de guidage du panneau mobile 2, le rail de guidage 8 du rideau mobile 9, un collier de maintien 70 du tube d'entraînement 3 du panneau mobile 2 et un collier de maintien 71 du tube d'entraînement 10 du rideau mobile 9.

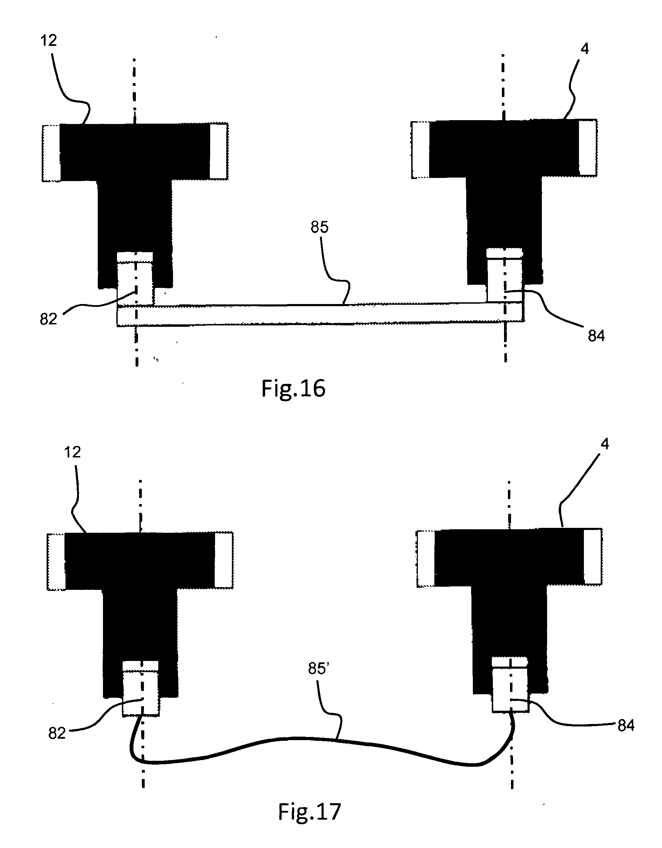

Les figures 16 et 17 illustrent un sixième mode d'exécution de l'invention dans lequel le pont de transfert de charge est réalisé par l'intermédiaire d'une liaison entre l'axe pignon moteur 82 de l'actionneur 12 du rideau mobile 9 et l'axe pignon moteur 84 de l'actionneur 4 du panneau mobile 2. La figure 16 illustre une première variante dans laquelle le pont de transfert de charge est réalisé par l'intermédiaire d'une liaison mécanique solide 85 entre les deux axes. La figure 17 illustre une seconde variante dans laquelle le pont de transfert de charge est réalisé par l'intermédiaire d'une liaison électrique semi-solide 85', par exemple par l'intermédiaire d'au moins un fil électrique, entre les deux axes. Naturellement, ces solutions sont telles qu'elles n'empêchent pas la rotation des moteurs.

Naturellement, d'autres liaisons électriques sont envisageables pour obtenir des résultats équivalents, permettant de relier électriquement un premier circuit conducteur comprenant par exemple des rails de guidage et des tubes d'entraînement, et menant vers un actionneur non sécurisé, à un second circuit conducteur comprenant par exemple des rails de guidage et des tubes d'entraînement, et menant à un actionneur sécurisé. Le concept peut s'appliquer à tout système présentant au moins deux actionneurs, dont au moins un quelconque est sécurisé contre les charges et décharges électriques ou électrostatiques. De plus, les modes d'exécution décrits utilisent des composants comme des vis, câbles, colliers, ... à titre d'exemple. Toute autre liaison électrique pourrait en variante être utilisée.

Le concept de l'invention a été illustré dans le cadre d'un agencement de toit ouvrant. Toutefois, il pourrait être implémenté sur tout système comprenant au moins deux actionneurs voisins, ou deux moteurs, ou deux cartes électroniques, ou deux calculateurs, soumis à des risques de charges électriques ou électrostatiques, quelque soit la cause de ces charges.

## Revendications

1. Agencement pour véhicule automobile comprenant un premier actionneur (4) destiné à mouvoir un premier composant mobile par l'intermédiaire de rails de guidage et de tubes d'entraînement formant un premier circuit conducteur et au moins un second actionneur (12) destiné à mouvoir un second composant mobile par l'intermédiaire de rails de guidage et de tubes d'entraînement formant un second circuit conducteur et susceptible de recevoir de fortes décharges électriques et/ou électrostatiques, **caractérisé en ce que** seul le premier actionneur (4) est protégé contre les fortes décharges électriques et/ou électrostatiques par une liaison (14) à une masse (13) et **en ce que** l'agencement comprend un moyen de transfert de charges (15) permettant de relier électriquement le second circuit conducteur menant vers le second actionneur (12) non sécurisé, au premier circuit conducteur menant au premier actionneur (4) sécurisé, de sorte à diriger une éventuelle décharge électrique et/ou électrostatique orientée vers au moins le second actionneur (12) vers le premier actionneur (4) protégé.

2. Agencement pour véhicule automobile selon la revendication 1, **caractérisé en ce qu'**il comprend un panneau de toit mobile (2), des rails de guidage (8) pour le panneau de toit mobile (2), au moins un tube d'entraînement (3) pour le panneau de toit mobile (2) **et en ce qu'**il comprend un panneau de toit fixe (1), un rideau mobile (9), des rails des rails de guidage (7) pour le rideau mobile (9), au moins un tube d'entraînement (10) pour le rideau mobile (9), et **en ce que** le au moins un tube d'entraînement (3) pour le panneau de toit mobile (2) et le au moins un tube d'entraînement (10) pour le rideau mobile (9) sont respectivement reliés mécaniquement et électriquement au premier actionneur (4) et à un second actionneur (12), le panneau de toit mobile (2) représentant le premier composant mobile et le rideau mobile (9) un second composant mobile, ou inversement.

3. Agencement pour véhicule automobile selon la revendication précédente, **caractérisé en ce que** le moyen de transfert de charges (15) comprend au moins un collier conducteur (25 ; 25') reliant électriquement tous les tubes d'entraînement du second composant mobile à au moins un tube d'entraînement du premier composant mobile.

4. Agencement pour véhicule automobile selon la revendication précédente, **caractérisé en ce qu'**il comprend deux colliers (25, 25') reliant chacun deux tubes d'entraînement (3) pour le panneau de toit mobile (2) et deux tubes d'entraînement (10) pour le rideau mobile (9), ces deux colliers (25, 25') étant implantés en amont et en aval et au plus près du second actionneur (12) non protégé électrostatiquement ou électriquement.

5. Agencement pour véhicule automobile selon la revendication 2, **caractérisé en ce que** le moyen de transfert de charges (15) comprend une liaison électrique entre le au moins tube d'entraînement (10) du second composant mobile et la masse électrique de l'actionneur (4) protégé contre les fortes décharges électriques et/ou électrostatiques.

6. Agencement pour véhicule automobile selon la revendication précédente, **caractérisé en ce qu'**il comprend un collier métallique (35) de serrage du au moins un tube d'entraînement du second composant mobile (9), relié électriquement à un fil de masse électrique (36) par l'intermédiaire d'une cosse (38), le fil de masse électrique (36) étant relié à la masse électrique du connecteur d'entrée (39) de l'actionneur protégé (4).

7. Agencement pour véhicule automobile selon la revendication 2, **caractérisé en ce que** le au moins un tube d'entraînement du second composant mobile est relié électriquement à au moins un rail de guidage métallique du premier composant mobile.

8. Agencement pour véhicule automobile selon la revendication précédente, **caractérisé en ce qu'**il comprend un collier de cerclage (45) d'au moins un tube d'entraînement (10) maintenu par une vis (47) traversant le rail de guidage (8) métallique du premier composant mobile (2).

9. Agencement pour véhicule automobile selon la revendication 2, **caractérisé en ce que** le moyen de transfert de charges (15) comprend une liaison conductrice entre les rails de guidage (7) du rideau mobile (9) et les rails de guidage (8) du panneau de toit mobile (2).

10. Agencement pour véhicule automobile selon la revendication 2, **caractérisé en ce que** le moyen de transfert de charges (15) comprend une liaison conductrice (75) entre le au moins un tube d'entraînement (10) du rideau mobile (9), les rails de guidage (7) du rideau mobile, les rails de guidage (8) du toit ouvrant (2) et le au moins un tube d'entraînement (3) du panneau mobile (2) du toit ouvrant.

11. Agencement pour véhicule automobile selon la revendication 1, **caractérisé en ce que** le moyen de transfert de charges (15) comprend une liaison (85, 85') entre les deux axes de rotation de respectivement les moteurs du premier actionneur (4) et du second actionneur (12).

12. Agencement pour véhicule automobile selon l'une des revendications précédente, **caractérisé en ce que** le premier actionneur (4) comprend un collecteur électriquement conducteur relié électriquement à la masse (13) de sa carte électronique (5) et agencé à faible distance en regard d'un organe d'articulation (6) de l'actionneur lié à au moins un tube d'entraînement du premier composant mobile de manière à présenter une résistance électrique quasi-nulle à l'écoulement des fortes décharges électriques et/ou électrostatiques.

13. Véhicule automobile **caractérisé en ce qu'**il comprend un agencement selon l'une des revendications précédentes.

## Claims

1. Arrangement for a motor vehicle comprising a first actuator (4) designed to move a first movable component by means of guide rails and of driving tubes forming a first conductive circuit, and at least one second actuator (12) designed to move a second movable component by means of guide rails and of driving tubes forming a second conductive circuit, and capable of receiving strong electrical and/or electrostatic discharges, **characterized in that** only the first actuator (4) is protected against the strong electrical and/or electrostatic discharges by a connection (14) to a ground (13) and **in that** the arrangement comprises a means for transferring charges (15) making it possible to electrically connect the second conductive circuit leading to the second, unprotected actuator (12) to the first conductive circuit leading to the first, protected actuator (4), so as to direct a possible electrical and/or electrostatic discharge oriented towards at least the second actuator (12) to the first, protected actuator (4).

2. Arrangement for a motor vehicle according to Claim 1, **characterized in that** it comprises a movable roof panel (2), guide rails (8) for the movable roof panel (2), at least one driving tube (3) for the movable roof panel (2) and **in that** it comprises a fixed roof panel (1), a movable curtain (9), guide rails (7) for the movable curtain (9), at least one driving tube (10) for the movable curtain (9), and **in that** the at least one driving tube (3) for the movable roof panel (2) and the at least one driving tube (10) for the movable curtain (9) are respectively mechanically and electrically connected to the first actuator (4) and to a second actuator (12), the movable roof panel (2) representing the first movable component and the movable curtain (9) a second movable component, or vice versa.

3. Arrangement for a motor vehicle according to the preceding claim, **characterized in that** the means for transferring charges (15) comprises at least one conductive collar (25; 25') electrically connecting all the driving tubes of the second movable component to at least one driving tube of the first movable component.

4. Arrangement for a motor vehicle according to the preceding claim, **characterized in that** it comprises two collars (25, 25') each connecting two driving tubes (3) for the movable roof panel (2) and two driving tubes (10) for the movable curtain (9), these two collars (25, 25') being installed upstream and downstream and as close as possible to the second actuator (12) that is unprotected electrostatically or electrically.

5. Arrangement for a motor vehicle according to Claim 2, **characterized in that** the means for transferring charges (15) comprises an electrical connection between the at least one driving tube (10) of the second movable component and the electrical earth of the actuator (4) protected against the strong electrical and/or electrostatic discharges.

6. Arrangement for a motor vehicle according to the preceding claim, **characterized in that** it comprises a metal collar (35) for clamping the at least one driving tube of the second movable component (9), electrically connected to an electrical earth wire (36) by means of a terminal (38), the electrical earth wire (36) being connected to the electrical earth of the input connector (39) of the protected actuator (4).

7. Arrangement for a motor vehicle according to Claim 2, **characterized in that** the at least one driving tube of the second movable component is electrically connected to at least one metal guide rail of the first movable component.

8. Arrangement for a motor vehicle according to the preceding claim, **characterized in that** it comprises a collar (45) for encircling at least one driving tube (10) retained by a screw (47) passing through the metal guide rail (8) of the first movable component (2).

9. Arrangement for a motor vehicle according to Claim 2, **characterized in that** the means for transferring charges (15) comprises a conductive connection between the guide rails (7) of the movable curtain (9) and the guide rails (8) of the movable roof panel (2).

10. Arrangement for a motor vehicle according to Claim 2, **characterized in that** the means for transferring charges (15) comprises a conductive connection (75) between the at least one driving tube (10) of the movable curtain (9), the guide rails (7) of the movable curtain, the guide rails (8) of the sun roof (2) and the at least one driving tube (3) of the movable panel (2) of the sun roof.

11. Arrangement for a motor vehicle according to Claim 1, **characterized in that** the means for transferring charges (15) comprises a connection (85, 85') between the two rotational axes of respectively the motors of the first actuator (4) and of the second actuator (12).

12. Arrangement for a motor vehicle according to one of the preceding claims, **characterized in that** the first actuator (4) comprises an electrically conductive collector electrically connected to the earth (13) of its electronic circuit board (5) and arranged at a short distance facing an articulation member (6) of the actuator connected to at least one driving tube of the first movable component so as to have a virtually zero electrical resistance to the flow of the strong electrical and/or electrostatic discharges.

13. Motor vehicle, **characterized in that** it comprises an arrangement according to one of the preceding claims.

## Patentansprüche

1. Anordnung für ein Kraftfahrzeug, die einen ersten Stellantrieb (4), der dazu bestimmt ist, ein erstes bewegliches Bauteil mittels einen ersten Leiterkreis bildender Führungsschienen und Antriebsrohre zu bewegen, und mindestens einen zweiten Stellantrieb (12) enthält, der dazu bestimmt ist, ein zweites bewegliches Bauteil mittels einen zweiten Leiterkreis bildender Führungsschienen und Antriebsrohre zu bewegen, und starke elektrische und/oder elektrostatische Entladungen empfangen kann, **dadurch gekennzeichnet, dass** nur der erste Stellantrieb (4) vor den starken elektrischen und/oder elektrostatischen Entladungen durch eine Verbindung (14) mit einer Masse (13) geschützt ist, und dass die Anordnung eine Ladungstransfereinrichtung (15) enthält, die es ermöglicht, den zum zweiten nicht gesicherten Stellantrieb (12) führenden zweiten Leiterkreis mit dem zum ersten gesicherten Stellantrieb (4) führenden ersten Leiterkreis zu verbinden, um eine mögliche elektrische und/oder elektrostatische Entladung, die zu mindestens dem zweiten Stellantrieb (12) gerichtet ist, zum ersten geschützten Stellantrieb (4) zu lenken.

2. Anordnung für ein Kraftfahrzeug nach Anspruch 1, **dadurch gekennzeichnet, dass** sie eine bewegliche Dachplatte (2), Führungsschienen (8) für die bewegliche Dachplatte (2), mindestens ein Antriebsrohr (3) für die bewegliche Dachplatte (2) enthält, und dass sie eine ortsfeste Dachplatte (1), eine bewegliche Jalousie (9), Führungsschienen (7) für die bewegliche Jalousie (9), mindestens ein Antriebsrohr (10) für die bewegliche Jalousie (9) enthält, und dass das mindestens eine Antriebsrohr (3) für die bewegliche Dachplatte (2) und das mindestens eine Antriebsrohr (10) für die bewegliche Jalousie (9) mechanisch und elektrisch mit dem ersten Stellantrieb (4) bzw. mit einem zweiten Stellantrieb (12) verbunden sind, wobei die bewegliche Dachplatte (2) das erste bewegliche Bauteil und die bewegliche Jalousie (9) ein zweites bewegliches Bauteil darstellt, oder umgekehrt.

3. Anordnung für ein Kraftfahrzeug nach dem vorhergehenden Anspruch, **dadurch gekennzeichnet, dass** die Ladungstransfereinrichtung (15) mindestens eine leitende Schelle (25; 25') enthält, die alle Antriebsrohre des zweiten beweglichen Bauteils mit mindestens einem Antriebsrohr des ersten beweglichen Bauteils elektrisch verbindet.

4. Anordnung für ein Kraftfahrzeug nach dem vorhergehenden Anspruch, **dadurch gekennzeichnet, dass** sie zwei Schellen (25, 25') enthält, die je zwei Antriebsrohre (3) für die bewegliche Dachplatte (2) und zwei Antriebsrohre (10) für die bewegliche Jalousie (9) verbinden, wobei diese zwei Schellen (25, 25') vor und hinter und so nahe wie möglich dem zweiten elektrostatisch oder elektrisch nicht geschützten Stellantrieb (12) eingebaut sind.

5. Anordnung für ein Kraftfahrzeug nach Anspruch 2, **dadurch gekennzeichnet, dass** die Ladungstransfereinrichtung (15) eine elektrische Verbindung zwischen dem mindestens einen Antriebsrohr (10) des zweiten beweglichen Bauteils und der elektrischen Masse des Stellantriebs (4) enthält, der vor den starken elektrischen und/oder elektrostatischen Entladungen geschützt ist.

6. Anordnung für ein Kraftfahrzeug nach dem vorhergehenden Anspruch, **dadurch gekennzeichnet, dass** sie eine metallische Klemmschelle (35) des mindestens einen Antriebsrohrs des zweiten beweglichen Bauteils (9) enthält, die über einen Kabelschuh (38) elektrisch mit einem elektrischen Massedraht (36) verbunden ist, wobei der elektrische Massedraht (36) mit der elektrischen Masse des Eingangsverbinders (39) des geschützten Stellantriebs (4) verbunden ist.

7. Anordnung für ein Kraftfahrzeug nach Anspruch 2, **dadurch gekennzeichnet, dass** das mindestens eine Antriebsrohr des zweiten beweglichen Bauteils mit mindestens einer metallischen Führungsschiene des ersten beweglichen Bauteils elektrisch verbunden ist.

8. Anordnung für ein Kraftfahrzeug nach dem vorhergehenden Anspruch, **dadurch gekennzeichnet, dass** sie eine Spannschelle (45) mindestens eines Antriebsrohrs (10) enthält, die von einer Schraube (47) gehalten wird, die die metallische Führungsschiene (8) des ersten beweglichen Bauteils (2) durchquert.

9. Anordnung für ein Kraftfahrzeug nach Anspruch 2, **dadurch gekennzeichnet, dass** die Ladungstransfereinrichtung (15) eine leitende Verbindung zwischen den Führungsschienen (7) der beweglichen Jalousie (9) und den Führungsschienen (8) der beweglichen Dachplatte (2) enthält.

10. Anordnung für ein Kraftfahrzeug nach Anspruch 2, **dadurch gekennzeichnet, dass** die Ladungstransfereinrichtung (15) eine leitende Verbindung (75) zwischen dem mindestens einen Antriebsrohr (10) der beweglichen Jalousie (9), den Führungsschienen (7) der beweglichen Jalousie, den Führungsschienen (8) des Schiebedachs (2) und dem mindestens einen Antriebsrohr (3) der beweglichen Platte (2) des Schiebedachs enthält.

11. Anordnung für ein Kraftfahrzeug nach Anspruch 1, **dadurch gekennzeichnet, dass** die Ladungstransfereinrichtung (15) eine Verbindung (85, 85') zwischen den zwei Drehachsen der Motoren des ersten Stellantriebs (4) bzw. des zweiten Stellantriebs (12) enthält.

12. Anordnung für ein Kraftfahrzeug nach einem der vorhergehenden Ansprüche, **dadurch gekennzeichnet, dass** der erste Stellantrieb (4) einen elektrisch leitenden Kollektor enthält, der elektrisch mit der Masse (13) seiner Elektronikkarte (5) verbunden und in geringem Abstand vor einem Anlenkorgan (6) des mit mindestens einem Antriebsrohr des ersten beweglichen Bauteils verbundenen Stellantriebs angeordnet ist, um beim Fließen starker elektrischer und/oder elektrostatischer Entladungen einen elektrischen Widerstand praktisch gleich Null aufzuweisen.

13. Kraftfahrzeug, **dadurch gekennzeichnet, dass** es eine Anordnung nach einem der vorhergehenden Ansprüche enthält.
